# EUROPEAN PATENT APPLICATION

(11) **EP 4 819 461 A1**
(43) Date of publication of application: **07.10.2026**
(21) Application number: 25757773.4
(22) Date of filing: 19.02.2025
(51) Int. Cl.: H02K 19/14, H02K 19/10

(54) **ROTOR, ELECTRIC MOTOR, COMPRESSOR, BLOWER, AND REFRIGERATION DEVICE**

(30) Priority: 22.02.2024 JP 2024025835
(71) Applicant: DAIKIN INDUSTRIES, LTD., Osaka-shi, Osaka 530-0001 (JP)
(72) Inventor: FU Yuu, Osaka-shi, Osaka 530-0001 (JP); TONARI Tatsuya, Osaka-shi, Osaka 530-0001 (JP); IRINO Yusuke, Osaka-shi, Osaka 530-0001 (JP); MIYAMURA Harunori, Osaka-shi, Osaka 530-0001 (JP); TAKEMOTO Masatsugu, Okayama-shi, Okayama 700-8530 (JP)
(74) Representative: Hoffmann Eitle
(86) International application number: PCT/JP2025/005544
(87) International publication number: WO 2025/178048

(57) **Abstract**

A rotor (12) includes a rotor core (13), a first flux barrier (31), and a first electric conductor (51). The rotor core (13) has a first outer peripheral surface (21) having an arc shape and centered on an axis of a shaft (11), and a second outer peripheral surface (22) having an arc shape, located further inward in a radial direction than the first outer peripheral surface (21), and centered on the axis. The first flux barrier (31) penetrates the rotor core (13) in an axial direction. The first flux barrier (31) includes a first gap portion (31a) having an arc shape, centered on the axis, and extending along the second outer peripheral surface (22), and a second gap portion (31b) linearly extending from an end portion of the first gap portion (31a) toward the first outer peripheral surface (21). The first electric conductor (51) is disposed in the first gap portion (31a).

## Description

### Technical Field

The present disclosure relates to a rotor, an electric motor, a compressor, a fan, and a refrigeration apparatus.

### Background Art

PTL 1 discloses a self-starting synchronous reluctance motor. The self-starting synchronous reluctance motor combines the feature of an induction motor and the feature of a reluctance motor. The self-starting synchronous reluctance motor can be started by generating a torque by squirrel-cage induction. Thus, the self-starting synchronous reluctance motor can be activated by a commercial power source and can perform a constant-speed operation by generating a reluctance torque.

### Citation List

### Patent Literature

PTL 1: Japanese Unexamined Patent Application Publication (Translation of PCT Application) No. 2022-537089

### Summary of Invention

### Technical Problem

However, a rotor structure of PTL 1 has grooves in an outer peripheral portion of a rotor core, and the grooves are filled with an electrically conductive material to form a cage-shaped structure. Thus, a loss caused by an eddy current is generated.

An object of the present disclosure is to provide a rotor capable of suppressing a loss caused by an eddy current generated in an electric conductor.

### Solution to Problem

A first aspect of the present disclosure is a rotor (12) configured to be rotatable about an axis of a shaft (11). The rotor (12) includes a rotor core (13), a first flux barrier (31), and a first electric conductor (51). The rotor core (13) has a first outer peripheral surface (21) having an arc shape and centered on the axis of the shaft (11), and a second outer peripheral surface (22) having an arc shape, located further inward in a radial direction than the first outer peripheral surface (21), and centered on the axis. The first flux barrier (31) penetrates the rotor core (13) in an axial direction. The first flux barrier (31) includes a first gap portion (31a) having an arc shape, centered on the axis, and extending along the second outer peripheral surface (22), and a second gap portion (31b) linearly extending from an end portion of the first gap portion (31a) toward the first outer peripheral surface (21). The first electric conductor (51) is disposed in the first gap portion (31a).

With the first aspect, the first gap portion (31a) of the first flux barrier (31) is provided on the inner peripheral side of the second outer peripheral surface (22) that is a recess in an outer periphery of the rotor core (13), and the first electric conductor (51) is disposed in the first gap portion (31a). Thus, a loss caused by an eddy current generated in the first electric conductor (51) can be suppressed.

A second aspect of the present disclosure, based on the first aspect, further includes a second flux barrier (32) penetrating the rotor core (13) in the axial direction, and a second electric conductor (52). The second flux barrier (32) includes a third gap portion (32a) having an arc shape, centered on the axis, and extending along the second outer peripheral surface (22) in parallel with the first gap portion (31a), and a fourth gap portion (32b) linearly extending from an end portion of the third gap portion (32a) toward the first outer peripheral surface (21) in parallel with the second gap portion (31b). The third gap portion (32a) is located further inward in the radial direction than the first gap portion (31a). The second electric conductor (52) is disposed in the fourth gap portion (32b).

With the second aspect, the second electric conductor (52) is disposed in the fourth gap portion (32b) of the second flux barrier (32) in addition to the first electric conductor (51) disposed in the first gap portion (31a) of the first flux barrier (31). Thus, a torque generated by squirrel-cage induction can be increased. Accordingly, a starting torque can also be increased.

In a third aspect of the present disclosure, based on the second aspect, the first electric conductor (51) is disposed further inward in the radial direction than the second outer peripheral surface (22). The second electric conductor (52) is disposed further inward in the radial direction than the second outer peripheral surface (22). When the arc shape of the first gap portion (31a) is extended to virtually draw a curve with a radius of curvature equal to a radius of curvature of the arc shape of the first gap portion (31a), the second electric conductor (52) is disposed at a position overlapping the curve.

With the third aspect, since the arrangement positions of the first electric conductor (51) and the second electric conductor (52) are aligned with each other, the starting torque can be smoothly generated. In addition, the starting torque can be increased as compared with the case where the second electric conductor (52) is disposed further inward in the radial direction than the curve, and the generation of an eddy current can be suppressed as compared with the case where the second electric conductor (52) is disposed further outward in the radial direction than the curve.

A fourth aspect of the present disclosure is an electric motor including the rotor (12) of any one of the first to third aspects.

With the fourth aspect, an electric motor with a small loss can be provided.

A fifth aspect of the present disclosure is a compressor including the electric motor (10) of the fourth aspect.

With the fifth aspect, a compressor with a small loss can be provided.

A sixth aspect of the present disclosure is a fan including the electric motor (10) of the fourth aspect.

With the sixth aspect, a fan with a small loss can be provided.

A seventh aspect of the present disclosure is a refrigeration apparatus including the electric motor (10) of the fourth aspect.

With the seventh aspect, a refrigeration apparatus with a small loss can be provided.

### Brief Description of Drawings

[Fig. 1] Fig. 1 is a perspective view illustrating a schematic configuration of a rotor of an embodiment, part (a) illustrating a state where the rotor is attached to a shaft, part (b) illustrating a state where an end plate is removed from a secondary conductor, part (c) illustrating a state where the secondary conductor is removed.
[Fig. 2] Fig. 2 is a view illustrating variations of a cross-sectional configuration of the rotor of the embodiment, part (a) illustrating a basic configuration, part (b) illustrating a configuration in which a plurality of flux barriers are provided, part (c) illustrating a modification of the shape of the secondary conductor, part (d) illustrating a modification of the number of layers of secondary conductors.
[Fig. 3] Fig. 3 is a view illustrating variations of the cross-sectional configuration of the rotor of the embodiment, part (a) illustrating another modification of the number of layers of the secondary conductors, part (b) illustrating a modification of the shape of a first outer peripheral surface, part (c) illustrating a modification of the number of poles, part (d) illustrating a modification of the number of the poles and the number of layers of the secondary conductors.
[Fig. 4] Fig. 4 is a view illustrating an example of a cross-sectional configuration of an electric motor of an embodiment.
[Fig. 5] Fig. 5 is a diagram illustrating an operation of the electric motor of the embodiment.
[Fig. 6] Fig. 6 is a diagram illustrating the operation of the electric motor of the embodiment.
[Fig. 7] Fig. 7 is a vertical sectional view illustrating an example of a configuration of a compressor of an embodiment.
[Fig. 8] Fig. 8 is a piping system diagram illustrating an example of a configuration of a refrigeration apparatus of an embodiment.

### Description of Embodiments

Hereinafter, embodiments of the present disclosure will be described with reference to the drawings. Note that the following embodiments are substantially preferable examples, and are not intended to limit the scope of the present invention, applications thereof, or uses thereof. In addition, in the drawings, the same reference signs denote the same components, but dimensions on the drawings such as the length, width, thickness, and depth are appropriately changed from actual scales for clarification and simplification of the drawings, and do not correspond to actual relative dimensions in some cases.

### <Rotor>

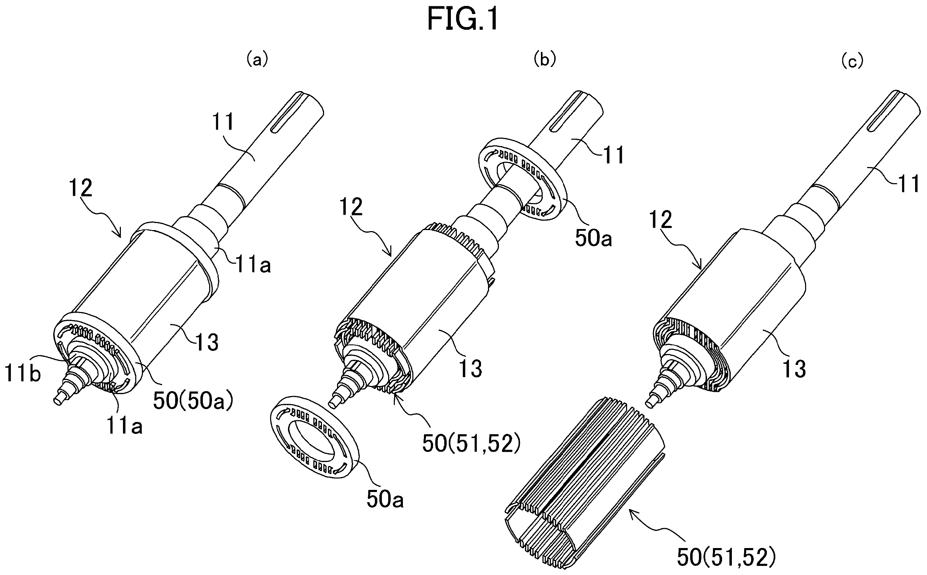

As illustrated in Fig. 1, a rotor (12) of the present embodiment is configured to be rotatable together with a shaft (11). The rotor (12) mainly includes a rotor core (13) having a substantially cylindrical columnar shape, and a secondary conductor (50) having a cage-shaped structure.

Note that, in the present disclosure, an axis of the shaft (11) is simply referred to as an "axis", a direction in which the axis extends, that is, a direction of a rotation axis of the rotor (12), is referred to as an "axial direction", a direction orthogonal to the direction of the rotation axis of the rotor (12) is referred to as a "radial direction", and a direction about the rotation axis of the rotor (12) is referred to as a "circumferential direction". In addition, a section along the axial direction is referred to as a "vertical section", and a section orthogonal to the axial direction is referred to as a "cross section".

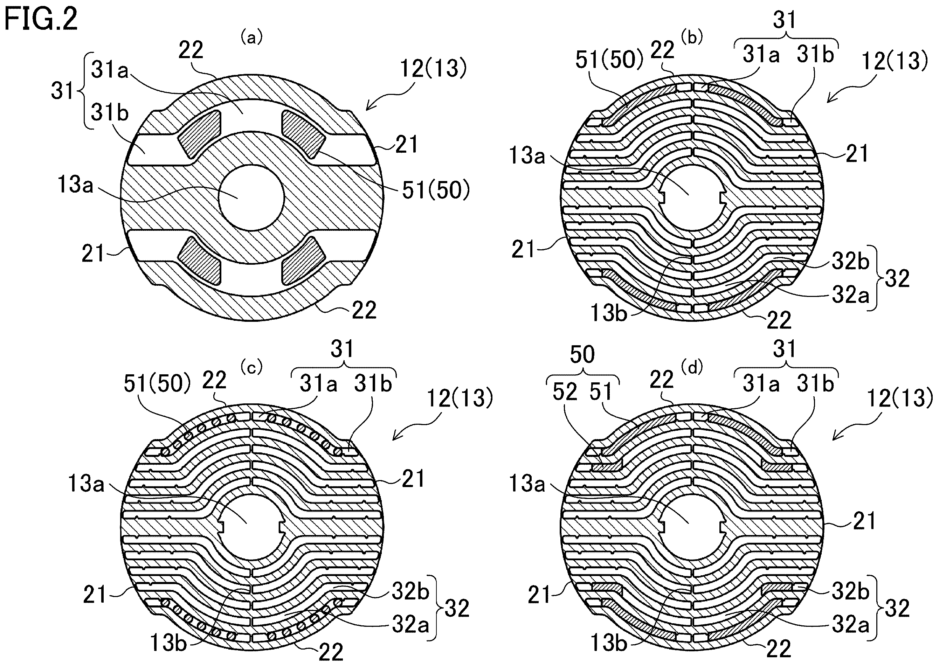

The rotor core (13) has a rotor core structure of a synchronous reluctance motor (SynRM). The rotor core (13) is formed by stacking electromagnetic steel sheets. The material of the rotor core (13) may be, for example, an amorphous alloy, a nanocrystal, or a powder magnetic core. A through hole (13a) (see Fig. 2) extending in the axial direction is provided in a center portion in the radial direction of the rotor core (13). The rotor core (13) is fixed to the shaft (11) by a lock nut (11b) with an end plate (11a) interposed in a state where the shaft (11) is inserted into the through hole (13a). Thus, the rotor (12) is configured to be rotatable about the axis.

The secondary conductor (50) has a shape extending in the axial direction. The secondary conductor (50) is inserted into the rotor core (13). A pair of end rings (50a) are disposed at both ends in the axial direction of the rotor core (13) to fix the secondary conductor (50) to the rotor core (13). The secondary conductor (50) and the end rings (50a) may be electrically connected to each other by a metal poured into gaps therebetween. The end rings (50a) self-short-circuit the secondary conductor (50) to form a cage-shaped structure, and provide a self-starting function.

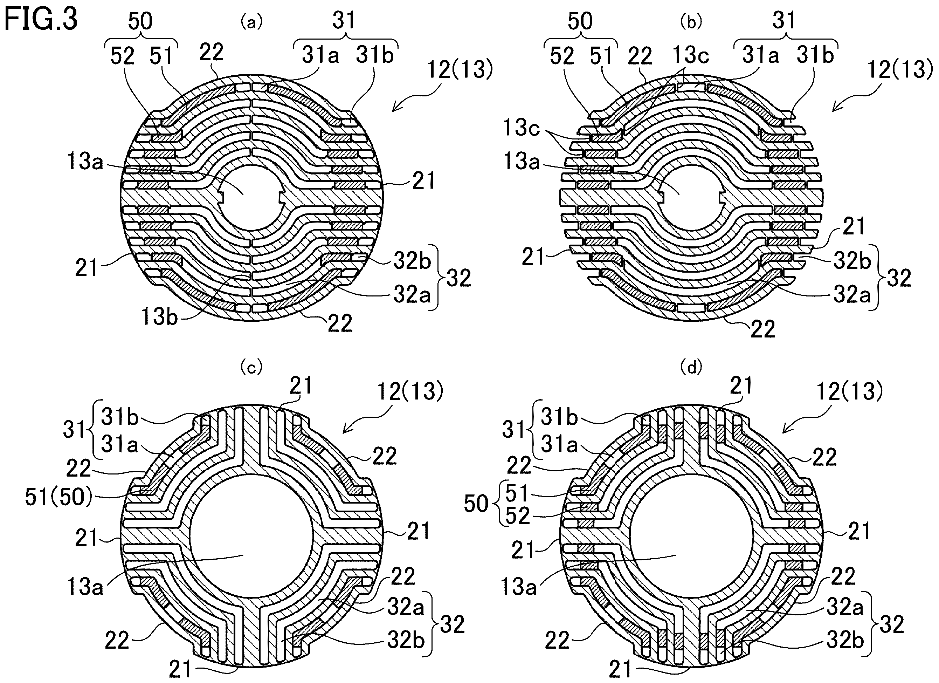

The secondary conductor (50) includes a first electric conductor (51) (see Fig. 2) extending in the axial direction, and may further include a second electric conductor (52) (see Figs. 2 and 3) extending in the axial direction. The secondary conductor (50) is made of an electrically conductive material such as, for example, aluminum or copper.

Figs. 2 and 3 illustrate variations of a cross-sectional configuration of the rotor (12). The cross-sectional configuration of the rotor (12) is basically the same at any position in the axial direction except for both end portions in the axial direction where the end rings (50a) are disposed.

In a basic configuration of the rotor (12) (part (a) of Fig. 2), the rotor core (13) has a first outer peripheral surface (21) having an arc shape and centered on the axis, and a second outer peripheral surface (22) having an arc shape, located further inward in the radial direction than the first outer peripheral surface (21), and centered on the axis. The second outer peripheral surface (22) is a recess in an outer periphery of the rotor core (13). The rotor core (13) is provided with a first flux barrier (31) that penetrates the rotor core (13) in the axial direction. The first flux barrier (31) includes a first gap portion (31a) having an arc shape, centered on the axis, and extending along the second outer peripheral surface (22), and a second gap portion (31b) linearly extending from an end portion of the first gap portion (31a) toward the first outer peripheral surface (21). The first gap portion (31a) is provided on the inner peripheral side of the second outer peripheral surface (22) that is the recess in the outer periphery of the rotor core (13).

The first electric conductor (51) included in the secondary conductor (50) is disposed in the first gap portion (31a) of the first flux barrier (31). As described above, the first electric conductor (51) is disposed further inward in the radial direction than the second outer peripheral surface (22) that is the recess in the outer periphery of the rotor core (13), in other words, a conductor is not disposed on a surface of the rotor core (13) in the radial direction. Thus, the generation of an eddy current can be suppressed. Specifically, when a motor is constituted using the rotor (12), there is an air gap between the second outer peripheral surface (22) of the rotor (12) and a stator. Thus, the first electric conductor (51) is less likely to be affected by a spatial harmonic magnetic flux, and the generation of an eddy-current loss can be suppressed. The first electric conductor (51) is made of a non-magnetic material. A magnet is not provided in the first flux barrier (31). That is, the rotor (12) is not provided with a magnet.

The cross-sectional shape of the first electric conductor (51) is not limited (part (a) to part (c) of Fig. 2, and part (c) of Fig. 3). For example, the first electric conductor (51) may be formed in an arc shape along the first gap portion (31a) (part (a) and part (b) of Fig. 2, and part (c) of Fig. 3), or may be formed of many rod-shaped portions extending in the axial direction (part (c) of Fig. 2).

An electric conductor does not have to be disposed in the second gap portion (31b) of the first flux barrier (31). For example, to avoid an increase in loss caused by an eddy current, an electric conductor is preferably not disposed in a portion of the second gap portion (31b) that is located on the outer side in the radial direction (a portion close to the first outer peripheral surface (21)). In contrast, an electric conductor may be disposed in a portion of the second gap portion (31b) that is located on the inner side in the radial direction.

The rotor core (13) may be provided with a second flux barrier (32) that penetrates the rotor core (13) in the axial direction (part (b) to part (d) of Fig. 2, and part (a) to part (d) of Fig. 3). A plurality of layers of second flux barriers (32) may be provided. The second flux barrier (32) includes a third gap portion (32a) having an arc shape, centered on the axis, and extending along the second outer peripheral surface (22) in parallel with the first gap portion (31a), and a fourth gap portion (32b) linearly extending from an end portion of the third gap portion (32a) toward the first outer peripheral surface (21) in parallel with the second gap portion (31b). The third gap portion (32a) of the second flux barrier (32) is located further inward in the radial direction than the first gap portion (31a) of the first flux barrier (31). When the first flux barrier (31) and the second flux barrier (32) are provided, a center rib (13b) may be provided to cross each flux barrier (31, 32) in the radial direction, to reinforce the structure of the rotor core (13). Moreover, in addition to the center rib (13b) provided at one location, a rib (13c) may be provided to partition the regions where the first electric conductor (51) and the second electric conductor (52) are formed, to further reinforce the structure of the rotor core (13).

The second electric conductor (52) may be disposed in the fourth gap portion (32b) of the second flux barrier (32) (part (d) of Fig. 2, and part (a), part (b), and part (d) of Fig. 3). In this case, the secondary conductor (50) includes the first electric conductor (51) and the second electric conductor (52). The second electric conductor (52) is made of a non-magnetic material. A magnet is not provided in the second flux barrier (32). That is, even when the first flux barrier (31) and the second flux barrier (32) are provided, the rotor (12) is not provided with a magnet. When a plurality of layers of second flux barriers (32) are provided, the second electric conductor (52) may be disposed in only one fourth gap portion (32b) (part (d) of Fig. 2), or may be disposed in each of a plurality of fourth gap portions (32b) (part (a), part (b), and part (d) of Fig. 3).

To avoid an increase in loss caused by an eddy current, the second electric conductor (52) is preferably not disposed in a portion of the fourth gap portion (32b) of the second flux barrier (32) that is located on the outer side in the radial direction (a portion close to the first outer peripheral surface (21)) (part (d) of Fig. 2, and part (a), part (b), and part (d) of Fig. 3). An electric conductor does not have to be disposed or may be disposed in the third gap portion (32a) of the second flux barrier (32). The cross-sectional shape of the second electric conductor (52) is not limited.

The first electric conductor (51) and the second electric conductor (52) included in the secondary conductor (50) may be disposed further inward in the radial direction than the second outer peripheral surface (22), and when the arc shape of the first gap portion (31a) in which the first electric conductor (51) is disposed is extended to virtually draw a curve with a radius of curvature equal to a radius of curvature of the arc shape of the first gap portion (31a), the second electric conductor (52) may be disposed at a position overlapping the curve (part (a) and part (b) of Fig. 3). As described above, the first electric conductor (51) and the second electric conductor (52) are disposed further inward in the radial direction than the second outer peripheral surface (22) that is the recess in the outer periphery of the rotor core (13), in other words, a conductor is not disposed on a surface of the rotor core (13) in the radial direction. Thus, the generation of an eddy current can be suppressed.

The second gap portion (31b) of the first flux barrier (31) and the fourth gap portion (32b) of the second flux barrier (32) may be exposed to the first outer peripheral surface (21) of the rotor core (13) (part (b) of Fig. 3). In this case, to form the first electric conductor (51) and the second electric conductor (52) by casting, a rib (13c) may be provided in each of the first gap portion (31a) of the first flux barrier (31) and the fourth gap portion (32b) of the second flux barrier (32) to partition the regions where the first electric conductor (51) and the second electric conductor (52) are formed such that a metal can be poured into the space interposed between the ribs (13c). In this case, the end ring (50a) may also be integrally formed with the secondary conductor (50) such that a metal can be poured into the end ring (50a).

The number of poles of the rotor (12) is not limited. The number of poles may be, for example, two (part (a) to part (d) of Fig. 2, and part (a) and part (b) of Fig. 3) or four (part (c) and part (d) of Fig. 3). Also in the rotor (12) having the four poles, one or more layers of second flux barriers (32) may be provided (part (c) and part (d) of Fig. 3), and the second electric conductor (52) may be disposed in the fourth gap portions (32b) of the second flux barriers (32) (part (d) of Fig. 3). When the plurality of layers of the second flux barriers (32) are provided, the second electric conductor (52) may be disposed in only one fourth gap portion (32b) or may be disposed in each of a plurality of fourth gap portions (32b) (part (d) of Fig. 3).

### <Electric Motor>

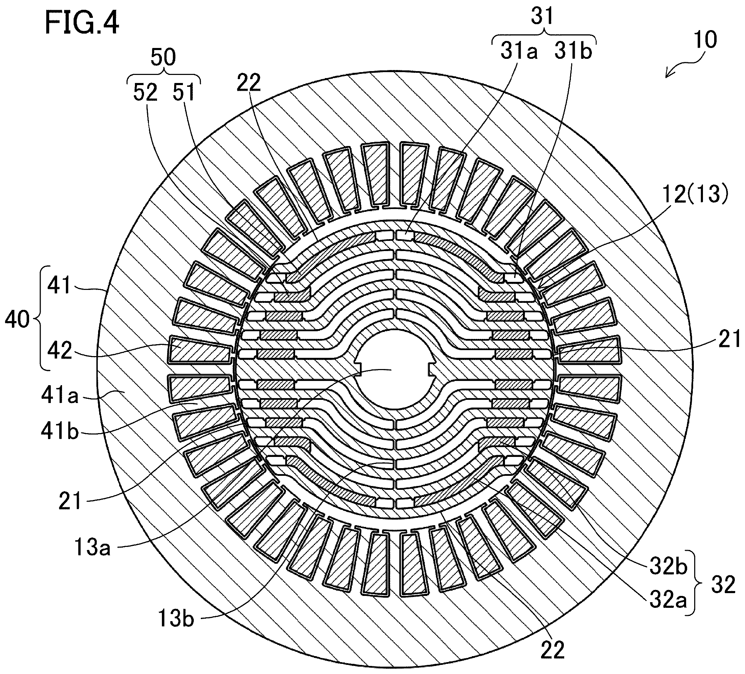

As illustrated in Fig. 4, an electric motor (10) of the present embodiment mainly includes the above-described rotor (12) and a stator (40) facing the rotor (12) with a predetermined gap interposed in the radial direction. The stator (40) includes a stator core (41) and a plurality of windings (42). The stator core (41) has a back yoke (41a) and a plurality of teeth (41b). The back yoke (41a) is formed in a substantially cylindrical shape. Each of the plurality of teeth (41b) extends inward in the radial direction from an inner peripheral surface of the back yoke (41a). The plurality of windings (42) are wound around the plurality of teeth (41b).

Note that the configuration of the electric motor (10) illustrated in Fig. 4 is an example, and the number of poles of the electric motor (10), the shape of the stator core (41), the number of teeth, the winding method of the windings (42), and so forth are not limited.

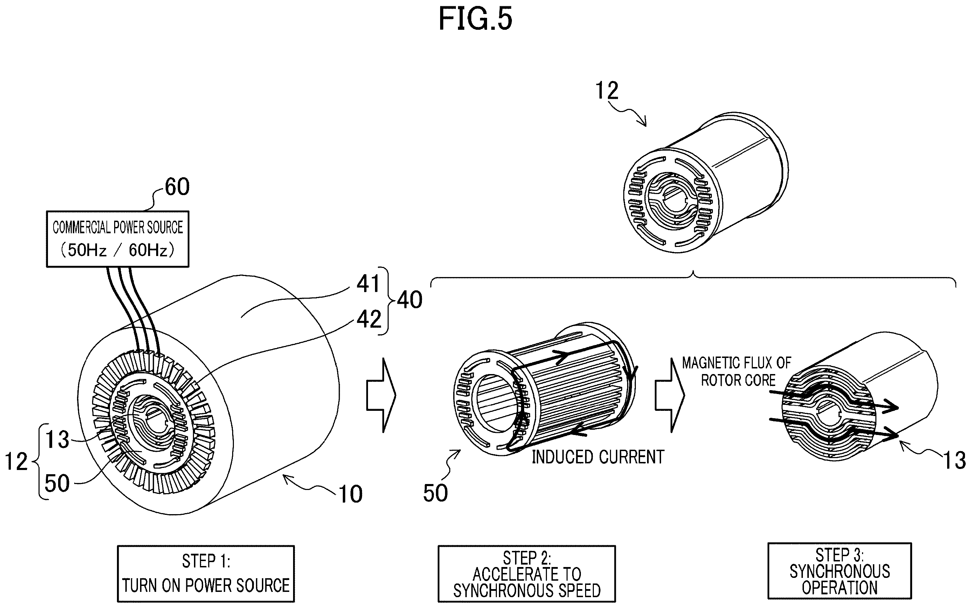

As illustrated in Fig. 5, the electric motor (10) is activated by causing an induced current to flow through the secondary conductor (50) that serves as a rotor core of an induction electric motor, using a commercial power source (50 Hz/60 Hz). Moreover, as the rotor (12) is accelerated to a predetermined synchronous speed by squirrel-cage induction, a reluctance torque is generated by a synchronous reluctance motor structure (hereinafter, referred to as a synchronous machine structure) of the rotor core (13), and a constant-speed operation (synchronous operation) at the synchronous speed is performed.

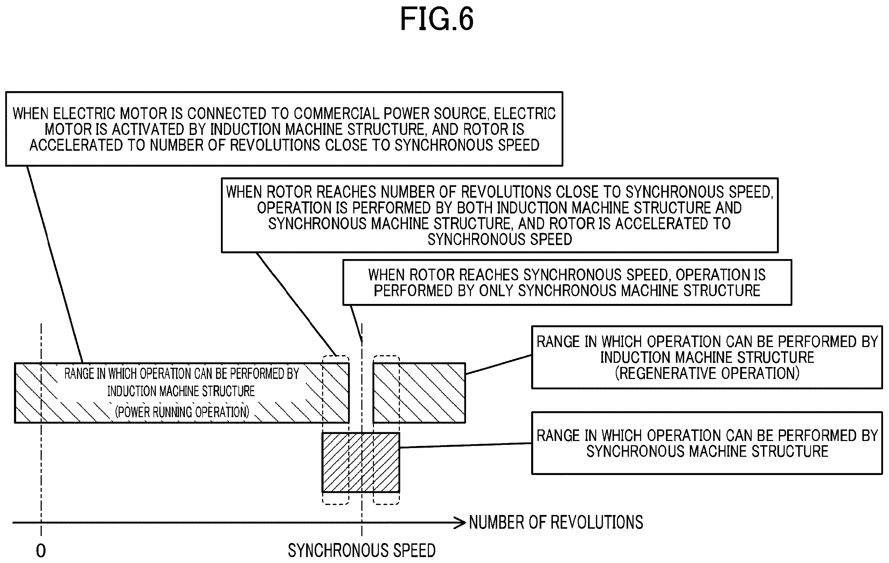

Specifically, as illustrated in Fig. 6, when the electric motor (10) is connected to the commercial power source, the electric motor (10) is activated by the structure of the induction electric motor (hereinafter, referred to as an induction machine structure), and the rotor (12) is accelerated to a number of revolutions close to the synchronous speed. Since the drive power source frequency and the rotor frequency do not match each other (slip) from the activation to the synchronous speed, an induced current is generated in the secondary conductor (50), and an acceleration torque is generated by an attractive force and a repulsive force between a magnetic flux generated by the induced current and a magnetic flux of a current flowing through the windings (42) of the stator (40).

When the rotor (12) reaches a number of revolutions close to the synchronous speed, the operation is performed by both the induction machine structure and the synchronous machine structure, which accelerates the rotor (12) to the synchronous speed. When the rotor (12) reaches the synchronous speed, the above-mentioned slip no longer occurs, and the induced current is no longer generated in the secondary conductor (50). At this time, since the frequency of the magnetic flux caused to flow through the rotor core (13) matches the power source frequency of the stator (40), the synchronous operation is performed by only the synchronous machine structure.

Note that the operation performed by the induction machine structure includes a regenerative operation in a range of numbers of revolutions higher than the above-described synchronous speed, in addition to a powered operation in a range of numbers of revolutions lower than the synchronous speed. When the rotor (12) is accelerated due to a fluctuation on the load side during the operation of the electric motor (10) and reaches a number of revolutions exceeding the synchronous speed, the electric motor (10) enters the state of the regenerative operation. In this case, the electric motor (10) operates as a generator to absorb the kinetic energy of the rotor (12) and the load and return electric power to the power source side.

As described above, the electric motor (10) has two merits of the high efficiency of the synchronous reluctance motor and the capability of activating the induction electric motor using the commercial power source.

In the electric motor (10), the second outer peripheral surface (22) that is the recess in the outer periphery of the rotor core (13) is provided in a path through which the magnetic flux is less likely to pass. Thus, the magnetic resistance can be further increased to increase the salient-pole ratio of the electric motor (10). Thus, the performance of the electric motor (10) is improved.

The electric motor (10) has the arrangement configuration in which the magnetic flux of the stator (40) is less likely to pass through the position of the secondary conductor (50) (air gap). Thus, a loss caused by an eddy current generated in the secondary conductor (50) can be reduced.

In the rotor core (13) of the electric motor (10), when the arc shape of the first gap portion (31a) in which the first electric conductor (51) is disposed is extended to virtually draw a curve with a radius of curvature equal to a radius of curvature of the arc shape of the first gap portion (31a), the second electric conductor (52) is preferably disposed at a position overlapping the curve (part (a) and part (b) of Fig. 3). As described above, when the secondary conductor (50) is disposed in the gap portions (31a and 32b) along the arc of the outer peripheral surface of the rotor core (13) (on the concentric circle), the starting torque of the electric motor (10) can be maximized.

In the electric motor (10), the amount of the secondary conductor (50) (specifically, the first electric conductor (51)) provided close to the second outer peripheral surface (22) that is the recess in the outer periphery of the rotor core (13) is increased. Thus, the starting performance of the electric motor (10) can be improved.

### <Compressor>

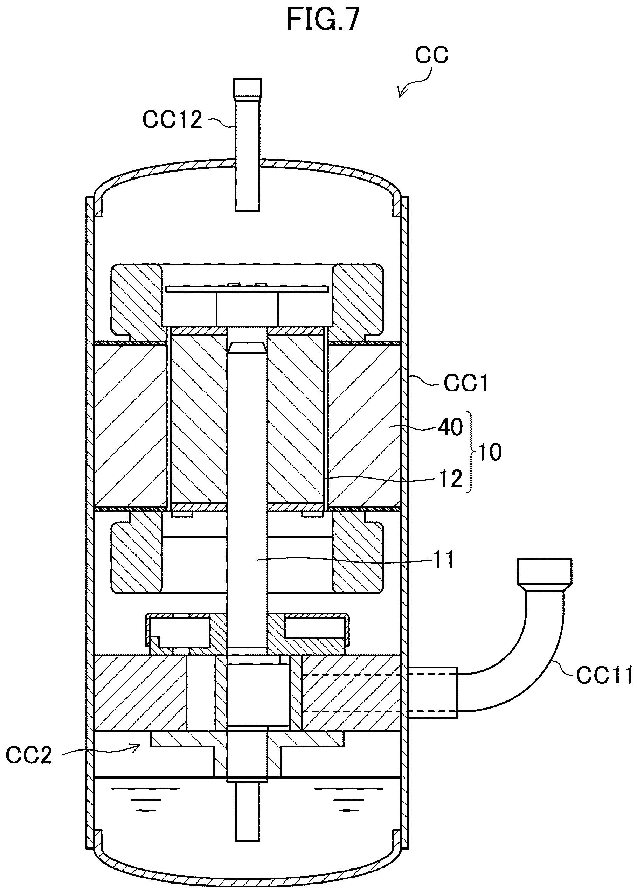

As illustrated in Fig. 7, a compressor (CC) of the present embodiment mainly includes the above-described electric motor (10), a casing (CC1), and a compression mechanism (CC2).

The casing (CC1) houses the compression mechanism (CC2) and the electric motor (10). In this example, the casing (CC1) is formed in a cylindrical shape extending in the vertical direction and having both ends closed. The casing (CC1) is provided with a suction pipe (CC11) and a discharge pipe (CC12). The suction pipe (CC11) penetrates a barrel of the casing (CC1) and is connected to the compression mechanism (CC2). The discharge pipe (CC12) penetrates an upper portion of the casing (CC1) and communicates with an internal space of the casing (CC1).

The compression mechanism (CC2) compresses a fluid. In this example, the compression mechanism (CC2) is disposed below the electric motor (10). The compression mechanism (CC2) compresses the fluid sucked through the suction pipe (CC11) and discharges the compressed fluid to the internal space of the casing (CC1). The fluid discharged to the internal space of the casing (CC1) is discharged through the discharge pipe (CC12). In this example, the compression mechanism (CC2) is a rotary compression mechanism.

The shaft (11) couples the electric motor (10) and the compression mechanism (CC2) to each other. In this example, the shaft (11) extends in the vertical direction. The electric motor (10) rotationally drives the shaft (11). The compression mechanism (CC2) is driven by the rotational driving of the shaft (11).

Note that the configuration of the compressor (CC) illustrated in Fig. 7 is an example, and the compressor (CC) is not limited to the rotary compressor as illustrated. For example, the compressor (CC) may be a swing compressor, a scroll compressor, a screw compressor, a turbo compressor, or another type of compressor.

### <Refrigeration Apparatus>

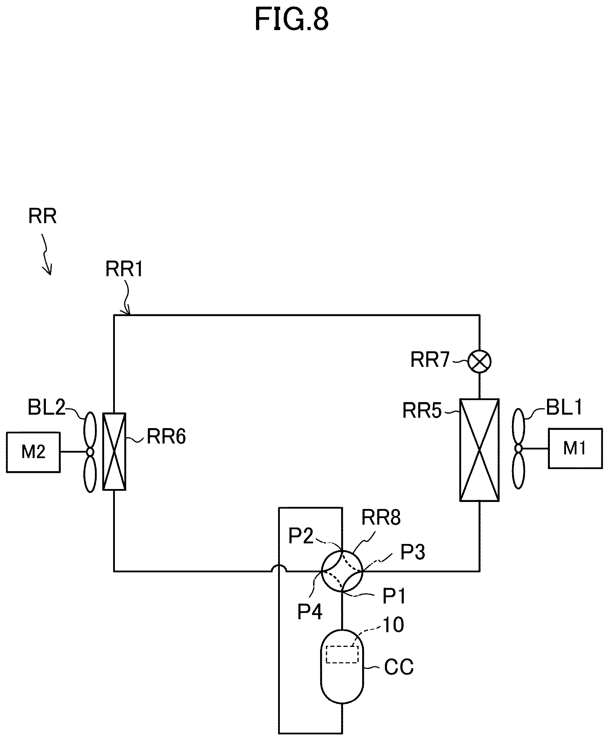

Fig. 8 is a diagram illustrating a configuration of a refrigeration apparatus (RR) of the present embodiment. The refrigeration apparatus (RR) includes a refrigerant circuit (RR1) through which a refrigerant circulates. Specifically, the refrigerant circuit (RR1) includes the compressor (CC) including the electric motor (10), a first heat exchanger (RR5), a second heat exchanger (RR6), an expansion mechanism (RR7), and a four-way switching valve (RR8). In this example, the expansion mechanism (RR7) is an electronic expansion valve. The refrigerant circuit (RR1) performs a vapor compression refrigeration cycle. For example, the first heat exchanger (RR5) is a heat-source-side heat exchanger and is provided outdoors. For example, the second heat exchanger (RR6) is a utilization-side heat exchanger and is provided indoors.

In the first heat exchanger (RR5), the refrigerant flowing through the first heat exchanger (RR5) exchanges heat with the air blown by a first fan (BL1). In the second heat exchanger (RR6), the refrigerant flowing through the second heat exchanger (RR6) exchanges heat with the air blown by a second fan (BL2).

The discharge side of the compressor (CC) is connected to a first port (P1) of the four-way switching valve (RR8). The suction side of the compressor (CC) is connected to a second port (P2) of the four-way switching valve (RR8). The gas end of the first heat exchanger (RR5) is connected to a third port (P3) of the four-way switching valve (RR8). The liquid end of the first heat exchanger (RR5) is connected to the liquid end of the second heat exchanger (RR6) via the expansion mechanism (RR7). The gas end of the second heat exchanger (RR6) is connected to a fourth port (P4) of the four-way switching valve (RR8).

The four-way switching valve (RR8) is switchable between a first state (a state indicated by solid lines in Fig. 8) where the first port (P1) and the third port (P3) communicate with each other and the second port (P2) and the fourth port (P4) communicate with each other, and a second state (a state indicated by broken lines in Fig. 8) where the first port (P1) and the fourth port (P4) communicate with each other and the second port (P2) and the third port (P3) communicate with each other.

When the four-way switching valve (RR8) is in the first state, the refrigerant discharged from the compressor (CC) radiates heat in the first heat exchanger (RR5), is decompressed in the expansion mechanism (RR7), and then absorbs heat in the second heat exchanger (RR6). The refrigerant flowing out of the second heat exchanger (RR6) is sucked into the compressor (CC).

When the four-way switching valve (RR8) is in the second state, the refrigerant discharged from the compressor (CC) radiates heat in the second heat exchanger (RR6), is decompressed in the expansion mechanism (RR7), and then absorbs heat in the first heat exchanger (RR5). The refrigerant flowing out of the first heat exchanger (RR5) is sucked into the compressor (CC).

Note that the configuration of the refrigeration apparatus (RR) illustrated in Fig. 8 is an example, and the refrigeration apparatus (RR) may be, for example, an air conditioner that switches between cooling and heating. Alternatively, the refrigeration apparatus (RR) may be an apparatus dedicated to cooling or an apparatus dedicated to heating. In this case, the four-way switching valve (RR8) may be omitted from the refrigeration apparatus (RR). Alternatively, the refrigeration apparatus (RR) may be a water heater, a chiller unit, a cooling apparatus that cools the air in a chamber, or the like. The cooling apparatus cools the air inside a refrigerator, a freezer, a container, or the like.

Also in this example, the electric motor (10) is used as the motor that drives the compressor (CC). However, in addition to or instead of this, the electric motor (10) may be used as a motor (M1) that drives the first fan (BL1) and/or a motor (M2) that drives the second fan (BL2).

### <Features of Embodiments>

A rotor (12) of the present embodiment is configured to be rotatable about an axis of a shaft (11). The rotor (12) includes a rotor core (13), a first flux barrier (31), and a first electric conductor (51). The rotor core (13) has a first outer peripheral surface (21) having an arc shape and centered on the axis of the shaft (11), and a second outer peripheral surface (22) having an arc shape, located further inward in a radial direction than the first outer peripheral surface (21), and centered on the axis. The first flux barrier (31) penetrates the rotor core (13) in an axial direction. The first flux barrier (31) includes a first gap portion (31a) having an arc shape, centered on the axis, and extending along the second outer peripheral surface (22), and a second gap portion (31b) linearly extending from an end portion of the first gap portion (31a) toward the first outer peripheral surface (21). The first electric conductor (51) is disposed in the first gap portion (31a).

In the rotor (12) of the present embodiment, the first gap portion (31a) of the first flux barrier (31) is provided on the inner peripheral side of the second outer peripheral surface (22) that is a recess in an outer periphery of the rotor core (13), and the first electric conductor (51) is disposed in the first gap portion (31a). Thus, a loss caused by an eddy current generated in the first electric conductor (51) can be suppressed.

The rotor (12) of the present embodiment may further include a second flux barrier (32) penetrating the rotor core (13) in the axial direction, and a second electric conductor (52). The second flux barrier (32) may include a third gap portion (32a) having an arc shape, centered on the axis, and extending along the second outer peripheral surface (22) in parallel with the first gap portion (31a), and a fourth gap portion (32b) linearly extending from an end portion of the third gap portion (32a) toward the first outer peripheral surface (21) in parallel with the second gap portion (31b). The third gap portion (32a) may be located further inward in the radial direction than the first gap portion (31a). The second electric conductor (52) may be disposed in the fourth gap portion (32b). As described above, when the second electric conductor (52) is disposed in the fourth gap portion (32b) of the second flux barrier (32) in addition to the first electric conductor (51) disposed in the first gap portion (31a) of the first flux barrier (31), a torque generated by squirrel-cage induction can be increased. Accordingly, a starting torque can also be increased.

In the rotor (12) of the present embodiment, the first electric conductor (51) and the second electric conductor (52) may be disposed further inward in the radial direction than the second outer peripheral surface (22), and when the arc shape of the first gap portion (31a) is extended to virtually draw a curve with a radius of curvature equal to a radius of curvature of the arc shape of the first gap portion (31a), the second electric conductor (52) may be disposed at a position overlapping the curve. As described above, when the arrangement positions of the first electric conductor (51) and the second electric conductor (52) are aligned with each other, the starting torque can be smoothly generated. In addition, the starting torque can be increased as compared with the case where the second electric conductor (52) is disposed further inward in the radial direction than the curve, and the generation of an eddy current can be suppressed as compared with the case where the second electric conductor (52) is disposed further outward in the radial direction than the curve.

An electric motor (10) of the present embodiment includes the rotor (12). Thus, the loss can be suppressed.

A compressor (CC) of the present embodiment includes the electric motor (10). Thus, the loss can be suppressed.

A fan (BL1, BL2) of the present embodiment includes the electric motor (10). Thus, the loss can be suppressed.

A refrigeration apparatus (RR) of the present embodiment includes the electric motor (10). Thus, the loss can be suppressed.

### (Other Embodiments)

In the rotor (12) of the above-described embodiments (including the modifications, the same applies to the following description), the second flux barrier (32) in which an electric conductor is not disposed in the third gap portion (32a) having the arc shape is disposed further inward in the radial direction than the first flux barrier (31) in which the first electric conductor (51) is disposed in the first gap portion (31a) having the arc shape. However, instead of this, the first flux barrier (31) may be disposed further inward in the radial direction than the second flux barrier (32). Note that, to increase the amount of the secondary conductor (50) provided close to the second outer peripheral surface (22) of the rotor core (13) for the purpose of improving the starting performance of the electric motor (10), the second flux barrier (32) is preferably disposed inward in the radial direction of the first flux barrier (31).

In addition, in the rotor (12) of the above-described embodiments (including the modifications, the same applies to the following description), the first gap portion (31a) having the arc shape and the linear second gap portion (31b) communicate with each other in the first flux barrier (31), and the third gap portion (32a) having the arc shape and the linear fourth gap portion (32b) communicate with each other in the second flux barrier (32). However, instead of this, a rib may be provided between the first gap portion (31a) and the second gap portion (31b) and/or between the third gap portion (32a) and the fourth gap portion (32b) for the purpose of ensuring the strength of the rotor core (13), forming (for example, casting) the secondary conductor (50), or the like.

Although the embodiments have been described, it should be understood that the embodiments and the details thereof are changeable in various ways without departing from the idea and scope of the claims. Moreover, the components of the above-described embodiments and modifications may be properly combined and exchanged. Further, the wordings of "first", "second", "third", and so forth described in the description and the claims are used to distinguish the terms to which these wordings are given, and do not limit the number or order of the terms.

### Industrial Applicability

As described above, the present disclosure is useful for a rotor, an electric motor, a compressor, a fan, and a refrigeration apparatus.

### Reference Signs List

- 10: electric motor
- 11: shaft
- 12: rotor
- 13: rotor core
- 21: first outer peripheral surface
- 22: second outer peripheral surface
- 31: first flux barrier
- 31a: first gap portion
- 31b: second gap portion
- 32: second flux barrier
- 32a: third gap portion
- 32b: fourth gap portion
- 51: first electric conductor
- 52: second electric conductor
- CC: compressor
- BL1, BL2: fan
- RR: refrigeration apparatus

## Claims

1. A rotor (12) configured to be rotatable about an axis of a shaft (11), comprising:
a rotor core (13) having a first outer peripheral surface (21) having an arc shape and centered on the axis of the shaft (11), and a second outer peripheral surface (22) having an arc shape, located further inward in a radial direction than the first outer peripheral surface (21), and centered on the axis;
a first flux barrier (31) penetrating the rotor core (13) in an axial direction; and
a first electric conductor (51),
wherein the first flux barrier (31) includes a first gap portion (31a) having an arc shape, centered on the axis, and extending along the second outer peripheral surface (22), and a second gap portion (31b) linearly extending from an end portion of the first gap portion (31a) toward the first outer peripheral surface (21), and
wherein the first electric conductor (51) is disposed in the first gap portion (31a).

2. The rotor according to claim 1, further comprising:
a second flux barrier (32) penetrating the rotor core (13) in the axial direction; and
a second electric conductor (52),
wherein the second flux barrier (32) includes a third gap portion (32a) having an arc shape, centered on the axis, and extending along the second outer peripheral surface (22) in parallel with the first gap portion (31a), and a fourth gap portion (32b) linearly extending from an end portion of the third gap portion (32a) toward the first outer peripheral surface (21) in parallel with the second gap portion (31b),
wherein the third gap portion (32a) is located further inward in the radial direction than the first gap portion (31a), and
wherein the second electric conductor (52) is disposed in the fourth gap portion (32b).

3. The rotor according to claim 2,
wherein the first electric conductor (51) is disposed further inward in the radial direction than the second outer peripheral surface (22),
wherein the second electric conductor (52) is disposed further inward in the radial direction than the second outer peripheral surface (22), and
wherein, when the arc shape of the first gap portion (31a) is extended to virtually draw a curve with a radius of curvature equal to a radius of curvature of the arc shape of the first gap portion (31a), the second electric conductor (52) is disposed at a position overlapping the curve.

4. An electric motor comprising the rotor (12) according to any one of claims 1 to 3.

5. A compressor comprising the electric motor (10) according to claim 4.

6. A fan comprising the electric motor (10) according to claim 4.

7. A refrigeration apparatus comprising the electric motor (10) according to claim 4.
